Europäisches Patentamt

European Patent Office

Office européen des brevets

(11) Veröffentlichungsnummer: **0 238 911**
**B1**

(12) **EUROPÄISCHE PATENTSCHRIFT**

(45) Veröffentlichungstag der Patentschrift:
13.06.90

(51) Int. Cl.⁵: **F16M 11/20, A47B 13/00**

(21) Anmeldenummer: 87103209.0

(22) Anmeldetag: 06.03.87

(54) **Ständer für ein Bedienungspult oder dgl.**

(30) Priorität: 26.03.86 DE 3610151

(43) Veröffentlichungstag der Anmeldung:
30.09.87 Patentblatt 87/40

(45) Bekanntmachung des Hinweises auf die Patenterteilung:
13.06.90 Patentblatt 90/24

(84) Benannte Vertragsstaaten:
AT BE CH DE ES FR GB GR IT LI LU NL SE

(56) Entgegenhaltungen:
DE-A- 3 509 989
DE-B- 1 956 364
FR-A- 2 268 488

(73) Patentinhaber: Rittal-Werk Rudolf Loh GmbH & Co. KG,
Auf dem Stützelberg, D-6348 Herborn(DE)

(72) Erfinder: Berg, Franco, Am Walde 2,
D-3304 Isernhagen(DE)
Erfinder: Zachrei, Jürgen, Am Hungersberg 2,
D-63441 Dillenburg 8(DE)

(74) Vertreter: Vogel, Georg, Pat.-Ing. Georg Vogel
Hermann-Essig-Strasse 35,
D-7141 Schwieberdingen(DE)

## Beschreibung

Die Erfindung betrifft einen Ständer für ein Bedienungspult oder dgl., der als vertikal ausgerichteter Säulenprofilabschnitt ausgebildet ist, mit dem unteren Ende an einer Standplatte befestigt ist und am oberen Ende das Bedienungspult oder dgl. trägt.

Bekannte und übliche Ständer dieser Art bestehen in der Regel aus einem Vierkantrohrabschnitt, dessen unteres Ende mit einer Bodenplatte verbunden ist, die im Bereich des Hohlraumes des Vierkantrohrabschnittes ausgespart ist, um die Zuleitungskabel zum Bedienungspult oder dgl. in den Vierkantrohrabschnitt einführen und zum Bedienungspult oder dgl. in diesem weiterführen zu können. Das Bedienungspult oder dgl. ist dabei auf die obere Stirnseite des Vierkantrohrabschnittes aufgesetzt, um die Zuleitungskabel aus dem Vierkantrohrabschnitt heraus in das Bedienungspult oder dgl. einführen zu können..

Diese bekannten Ständer werden in der Nähe der zugeordneten Maschine fest mit dem Boden verbunden, nachdem die Zuleitungskabel in den Vierkantrohrabschnitt eingeführt sind. Das Einführen der Zuleitungskabel ist daher sehr schwierig, da diese unter der Bodenplatte in die untere Stirnseite des Vierkantrohrabschnittes eingeführt werden müssen. Darüber hinaus ist es praktisch unmöglich, ein Zuleitungskabel mit am Ende angebrachter Steckeinrichtung durch den Vierkantrohrabschnitt hindurch in das am oberen Ende des Vierkantrohrabschnittes angebrachte Bedienungspult oder dgl. einzuführen. Die Steckeinrichtung muß vorher abgemacht und nach dem Einführen des Zuführungskabels in das Bedienungspult oder dgl. wieder angebracht werden. Ein weiterer Nachteil des bekannten Ständers liegt darin, daß er nicht auf einfache Weise an einen anderen Einsatzort gebracht werden kann.

Aus der DE-B 1 956 364 ist ein Arbeitstisch bekannt, bei dem ein Bein teleskopartig unterteilt ist. Der untere Teil ist mit einer Befestigungsplatte versehen, während der obere Teil durch die Arbeitsplatte hindurchgeführt ist, diese überragt und am oberen Ende eine Ablage trägt.

Aus der DE-A 3 509 989 ist eine Kabelaufnahme mit einem U-förmigen Grundprofil bekannt, das mittels deckelartiger, weitere Aufnahmen tragender Teile verschließbar ist.

Aus der FR-A 2 268 488 ist ein fahrbarer Arbeitstisch zur Aufnahme von Arbeitsgeräten bekannt. Die Arbeitsplatte mit den Arbeitsgeräten wird von einem vertikalen Ständer getragen, dessen unteres Ende mit einem dreibeinigen und mit Laufrollen versehenen Fußgestell verbunden ist.

Es ist Aufgabe der Erfindung, einen Ständer der eingangs erwähnten Art zu schaffen, bei dem Zuleitungseinrichtungen mit oder ohne Steckeinrichtungen schnell und leicht in den Ständer eingebracht und bis zum Bedienungspult geführt werden können, ohne bei festem Einsatz die Befestigung lösen zu müssen oder bei ortsveränderlichem Einsatz das Bewegen des Ständers zu erschweren.

Diese Aufgabe wird nach der Erfindung dadurch gelöst, daß der Säulenprofilabschnitt ein U-Profilabschnitt mit Mittelschenkel und zwei Seitenschenkeln ist, der an einer Schmalseite einer rechteckförmigen, zur Standfläche hin offenen kappenartigen Standplatte in einer Ausnehmung mit nach außen offener Aufnahme befestigt ist, daß die Aufnahme des U-Profilabschnittes mittels einer Deckplatte abdeckbar ist, daß die Standplatte mit Befestigungsaufnahmen für Befestigungsschrauben versehen ist und an der Schmalseite mit dem U-Profilabschnitt zu beiden Seiten desselben jeweils mindestens eine Laufrolle trägt, daß die Laufrolle bündig mit der Standfläche der Standplatte abschließen, an der Schmalseite derselben vorstehen und horizontal und parallel zu dieser Schmalseite drehbar gelagert sind, daß am oberen Ende des U-Profilabschnittes im Mittelschenkel ein Durchbruch eingebracht ist, in den ein ringförmiger Kunststoff-Flansch isolierend eingesetzt ist, daß das Bedienungspult oder dgl. im Bereich des Kunststoff-Flansches an dem U-Profilabschnitt befestigt ist und daß die obere Stirnseite des U-Profilabschnittes mittels eines mit einem Haltegriff versehenen Kopfstückes verschlosen ist.

Bei dieser Ausgestaltung der Standplatte kann der Ständer in bekannter Weise mit der Standfläche verschraubt werden. Bei leichter Neigung des U-Profilabschnittes kann der Ständer über die Laufrollen bewegt werden, wobei der Ständer am Traggriff des Kopfstückes gehalten wird. Das Bedienungspult oder dgl. steht bei aufgestelltem Ständer stets über der einseitig am U-Profilabschnitt abstehenden Standplatte. Dies führt ohne Schraubbefestigung schon zu einem sicheren Stand. Die Deckplatte kann leicht vom U-Profilabschnitt gelöst werden, so daß die Zuleitungskabel schnell und leicht eingelegt und durch den Durchbruch und den darin eingesetzten Kunststoff-Flansch hindurch in das Bedienungspult oder dgl. eingeführt werden können. Dabei stört auch eine am Ende des Zuleitungskabels angebrachte Steckeinrichtung nicht. Der Kunststoff-Flansch isoliert gleichzeitig den Durchbruch in dem U-Profilabschnitt, so daß das durchgeführte Zuleitungskabel nicht mit den scharfen Kanten des Durchbruches in Berührung kommt. Der so gestaltete Ständer erfüllt in optimaler Weise alle an ihn gestellten Anforderungen für festen und ortsveränderlichen Einsatz.

Um eine ausreichende Befestigungsfläche zwischen der Standplatte und dem U-Profilabschnitt zu bekommen, sieht eine Ausgestaltung vor, daß die Ausnehmung in der Schmalseite der Standplatte durch über die Oberseite derselben hochgezogene Wandteile gebildet ist, die über geneigte Wandabschnitte in die Oberseite der Standplatte übergehen.

Die Verbindung kann dabei dadurch vollzogen werden, daß der U-Profilabschnitt mit dem Mittelschenkel und den Seitenschenkeln mit den Wandteilen der Standplatte verbunden, vorzugsweise verschraubt ist.

Ist nach einer weiteren Ausgestaltung vorgesehen, daß die Innenseite des Mittelschenkels des U-Profilabschnittes abwechselnd im Querschnitt T-förmige Längsnuten und Längsstege aufweist, dann können die Zuleitungskabel mittels an sich bekannter Haltemittel an der Innenseite des Mittelschenkels des U-Profilabschnittes zusätzlich befestigt werden.

Für die leicht lösbare Anbringung der Deckplatte an dem U-Profilabschnitt ist nach einer Ausgestaltung vorgesehen, daß die Seitenschenkel zumindest in den freien Endbereichen doppelwandig ausgebildet sind und zu ihren Stirnseiten hin offene Stecknuten bilden, in die Haltestege der Deckplatte einführbar und darin festlegbar sind.

Das Ziehen des Ständers mit dem Abrollen der Laufrollen auf dem Boden wird dadurch erleichtert, daß die untere Kante der Schmalseite mit dem U-Profilabschnitt über eine Schräge in die Standfläche der Standplatte übergehen und daß die Laufrollen über diese Schräge der Standplatte vorstehen. Es genügt schon eine kleine Neigung des U-Profilabschnittes, damit die Laufrollen auf dem Boden aufstehen und die Standplatte vom Boden abheben.

Die Drehlagerung der Laufrollen ist in einfacher Weise dadurch gelöst, daß die Laufrollen auf Schrauben drehbar gelagert sind, die in vertikalen Wandteilen der Standplatte befestigt sind.

Die vorzugsweise als Gußteil ausgebildete Standplatte läßt sich dadurch mit wenig Gewicht in ausreichender Festigkeit herstellen, daß die Standplatte innerhalb eines umlaufenden Randes mittels längs- und quergerichteter Rippen versteift ist.

Die isolierte Anbringung des Bedienungspultes oder dgl. an dem U-Profilabschnitt wird dadurch erreicht, daß der Kunststoff-Flansch über eine Kunststoffscheibe an der Innenseite des Mittelschenkels des U-Profilabschnittes anliegt und daß das Bedienungspult oder dgl. mit seiner Rückwand mittels einer ringförmigen Klemmscheibe an dem in den Durchbruch eingesetzten Kunststoff-Flansch befestigt ist, wobei zwischen der Rückwand des Bedienungspults oder dgl. und dem Mittelschenkel des U-Profilabschnittes eine weitere Kunststoffscheibe angeordnet ist. Die Weiterführung der Zuleitungskabel in das Innere des Bedienungspultes oder dgl. wird dadurch sichergestellt, daß die Rückwand des Bedienungspultes oder dgl. innerhalb der Klemmscheibe mit einem Durchbruch zum Einführen der Zuleitungen versehen ist oder eine Steckeinrichtung für eine am Zuleitungskabel angebrachte komplementäre Steckeinrichtung trägt.

Die Verbindung des Kopfstückes mit dem U-Profilabschnitt und die Ausbildung des Traggriffes sind nach einer einfachen Ausgestaltung so gelöst, daß das Kopfstück mittels Steckansätzen in die Aufnahme des U-Profilabschnittes eingesteckt ist, daß das Kopfstück kappenartig ausgebildet ist und im Querschnitt dem Querschnitt des mit der Deckplatte verschlossenen U-Profilabschnittes entspricht und daß in die mit der Deckplatte fluchtende Wand des Kopfstückes ein als Langloch ausgebildeter Haltegriff eingebracht ist.

Die Erfindung wird anhand eines in den Zeichnungen dargestellten Ausführungsbeispiels näher erläutert. Es zeigt:

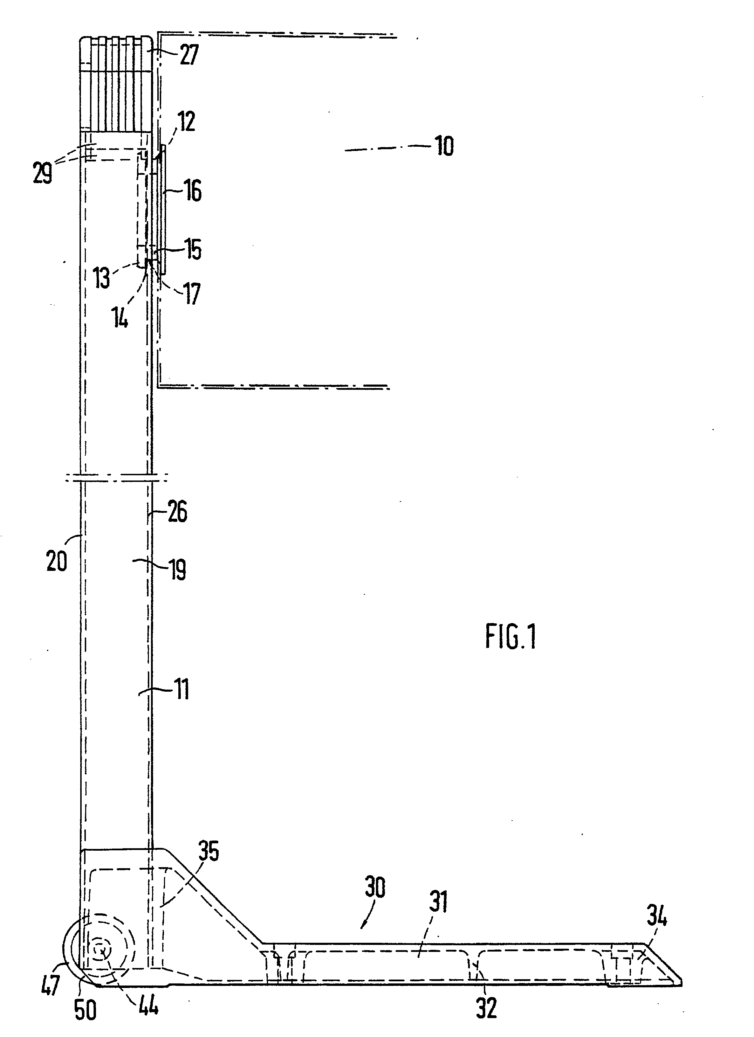

Fig. 1 die Seitenansicht des Ständers mit Standplatte und Kopfstück,

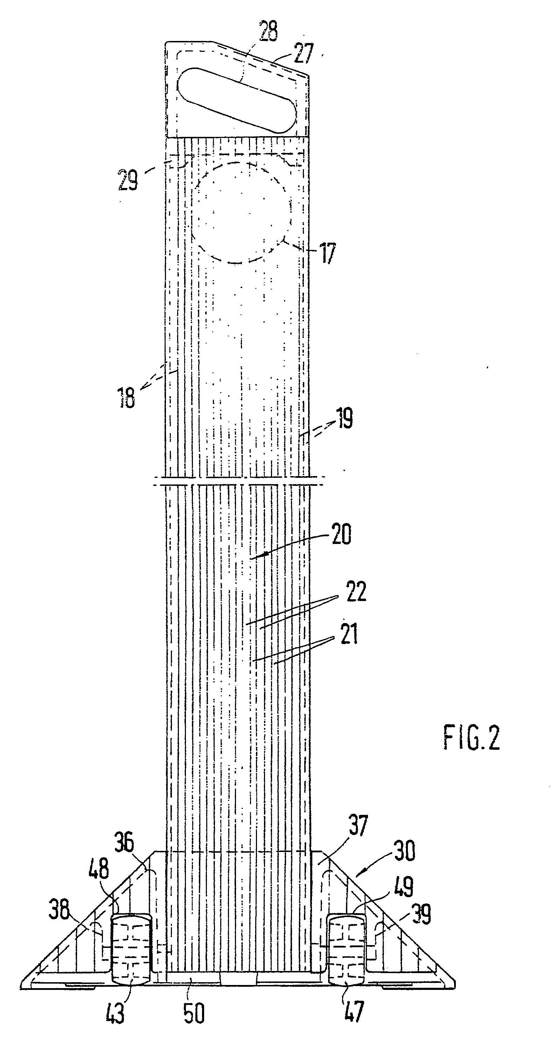

Fig. 2 die Ansicht auf die mit der Deckplatte verschlossene Aufnahme des als U-Profilabschnitt ausgebildeten Ständers und

Fig. 3 einen Querschnitt durch den Ständer, in Richtung auf die Oberseite der Standplatte gesehen.

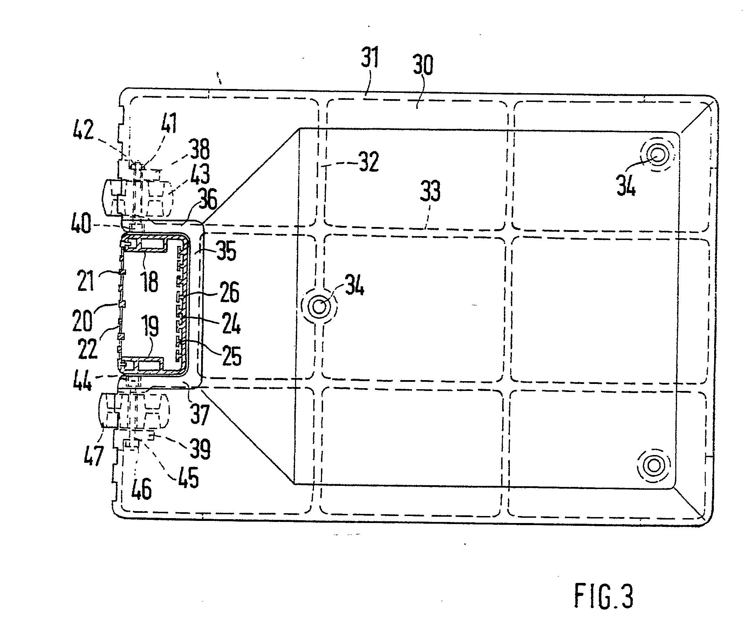

Bei dem Ständer wird als vertikaler Säulenprofilabschnitt der U-Profilabschnitt 11 verwendet, der mit der Deckplatte 20 verschlossen ist, wie dem Schnitt nach Fig. 3 zu entnehmen ist. Der U-Profilabschnitt 11 besteht aus dem Mittelschenkel 26 und den beiden Seitenschenkeln 18 und 19, die in einer Ausnehmung in einer Schmalseite der kappenartigen, rechteckförmigen Standplatte 30 befestigt ist und zwar so, daß die Aufnahme nach außen weist. Die Standplatte 30 ist zur Standfläche hin offen und innerhalb des umlaufenden Randes 31 ist sie mittels der quer- und längsgerichteten Rippen 32 und 33 versteift.

Zur Befestigung der Standplatte 30 am Boden sind die Befestigungsaufnahmen 34 für mit einem Kopf versehene Befestigungsschrauben angeformt. Im Bereich der Schmalseite mit der Ausnehmung für den U-Profilabschnitt 11 sind die Wandteile 35,36 und 37 über die Oberseite der Standplatte 30 hochgezogen, um große Befestigungsflächen und Abstützflächen zu erhalten. Der U-Profilabschnitt 11 ist mittels Schrauben mit diesen Wandteilen 35,36 und 37 verschraubt, die über geneigte Wandabschnitte in die Oberseite der Standplatte 30 übergehen.

Im Bereich der Schmalseite mit der Ausnehmung für den U-Profilabschnitt 11 sind zu beiden Seiten der Ausnehmung durch die vertikalen Wandteile 36,37,38 und 39 Kammern 48 und 49 abgeteilt, in denen die beiden Laufrollen 43 und 47 drehbar gelagert sind. Die Schrauben 40 und 44 sind in den Wandteilen 36,37,38 und 39 gelagert und mittels der Unterlegscheiben 41 und 45, sowie der Muttern 42 und 46 gehalten. Die Schrauben 40 und 44 bilden horizontale Drehachsen für die Laufrollen 43 und 47, die zudem parallel zu der zugekehrten Schmalseite der Standplatte 30 verlaufen. Die Laufrollen 43 und 47 stehen über die Schmalseite vor und ragen auch über die Schräge 50 hinaus, mit der die Schmalseite in die Standfläche übergeht. Bei leichtem Neigen des U-Profilabschnittes 11 kommen die Laufrollen 43 und 47, die sonst bündig mit der Standfläche der Standplatte 30 abschließen, mit dem Boden in Kontakt und heben schließlich die Standplatte 30 vollständig vom Boden ab, so daß der Ständer leicht auf dem Boden gezogen werden kann, wobei die Laufrollen 43 und 47 auf dem Boden abrollen.

Auf der Innenseite des Mittelschenkels 26 des U-Profilabschnittes 11 sind abwechselnd im Querschnitt T-förmige Längsnuten 24 und Längsstege 25 angeformt, so daß auf einfache Weise Haltemittel daran anbringbar sind, mit denen die Zuleitungskabel über die gesamte Länge im U-Profilabschnitt 11 festlegbar sind. Der U-Profilabschnitt 11 hat eine Länge, die an die übliche Arbeitshöhe einer stehenden oder sitzenden Person angepaßt sein kann. Die Seitenschenkel 18 und 19 des U-Profilabschnittes 11 sind zumindest in den Endbereichen doppelwandig und als Hohlprofil ausgebildet. An den Stirnseiten bilden die Seitenschenkel 18 und 19 offene Stecknuten, in die an der Deckplatte 20 angeformte Haltestege einführbar und darin festlegbar sind. Die Deckplatte 20 kann daher leicht von dem U-Profilabschnitt 11 gelöst werden. Sind die Zuleitungskabel eingelegt, am U-Profilabschnitt 11 festgelegt und in das Bedienungspult 10 oder dgl. eingeführt, dann kann die Aufnahme des U-Profilabschnittes 11 mit der Deckplatte 20 wieder verschlossen werden. Die Deckplatte 20 kann abwechselnd dünne und dicke Wandbereiche aufweisen, wie die Bezugszeichen 21 und 22 zeigen.

Im Bereich des oberen Endes ist in den Mittelschenkel 26 des U-Profilabschnittes 11 der runde Durchbruch 17 eingebracht, der groß genug ist, damit auch eine am Ende eines Zuleitungskabels angebrachte Steckeinrichtung hindurchgesteckt werden kann. In den Durchbruch 17 ist der ringförmige Kunststoff-Flansch 13 eingesetzt, der mit einem hülsenförmigen Ansatz den Durchbruch 17 abdeckt. Zwischen dem Kunststoff-Flansch 17 und dem Mittelschenkel 26 ist eine erste Kunststoffscheibe 14 angeordnet. Auf der Außenseite des Mittelschenkels 26 deckt die zweite Kunststoffscheibe 12 den Durchbruch 17 ab. Die Klemmscheibe 16 ist mit Bohrungen versehen, die mit Gewindesacklochbohrungen des Kunststoff-Flansches 13 fluchten. Die in die Bohrungen der Klemmscheibe 16 eingeführten und in die Gewindesacklochbohrungen des Kunststoff-Flansches 13 eingeschraubten Schrauben legen die Rückwand des Bedienungspultes 10 oder dgl. an dem Kunststoff-Flansch 13 fest, der damit gleichzeitig in dem Durchbruch 17 des Mittelschenkels 26 gehalten ist. Die Klemmscheibe 16 ist ringförmig und umschließt einen Durchbruch in der Rückwand des Bedienungspultes 10 oder dgl. Das Zuleitungskabel kann durch diesen Durchbruch der Rückwand hindurch in das Bedienungspult 10 oder dgl. eingeführt werden. Im Bereich dieses Durchbruches kann im Bedienungspult 10 auch eine komplementäre Steckeinrichtung angeordnet sein, so daß die am Ende des Zuleitungskabels angebrachte Steckeinrichtung durch den Kunststoff-Flansch 13 hindurch sofort in diese komplementäre Steckeinrichtung eingesteckt werden kann.

Die obere Stirnseite des U-Profilabschnittes 11 wird mittels des kappenartigen Kopfstückes 27 verschlossen. Das Kopfstück 27 wird mit Steckansätzen 29 in die Aufnahme des U-Profilabschnittes 11 eingeführt und darin festgelegt. Die Seitenwand des Kopfstückes 27, die mit der Deckplatte 20 fluchtet, ist mit einem Langloch als Haltegriff 28 versehen, an dem der Ständer gefaßt und geneigt gehalten werden kann, wenn er über die Laufrollen 43 und 47 an einen anderen Einsatzort gefahren wird.

**Patentansprüche**

1. Ständer für ein Bedienungspult oder dgl., der als vertikal ausgerichteter Säulenprofilabschnitt ausgebildet ist, mit dem unteren Ende an einer Standplatte befestigt ist und am oberen Ende das Bedienungspult oder dgl. trägt, dadurch gekennzeichnet,
daß. der Säulenprofilabschnitt ein U-Profilabschnitt (11) mit Mittelschenkel (26) und zwei Seitenschenkeln (18,19) ist, der an einer Schmalseite einer rechteckförmigen, zur Standfläche hin offenen kappenartigen Standplatte (30) in einer Ausnehmung mit nach außen offener Aufnahme befestigt ist,
daß die Aufnahme des U-Profilabschnittes (11) mittels einer Deckplatte (20) abdeckbar ist,
daß die Standplatte (30) mit Befestigungsaufnahmen (34) für Befestigungsschrauben versehen ist und an der Schmalseite mit dem U-Profilabschnitt (11) zu beiden Seiten desselben jeweils mindestens eine Laufrolle (43,47) trägt,
daß die Laufrollen (43,47) bündig mit der Standfläche der Standplatte (30) abschließen, an der Schmalseite derselben vorstehen und horizontal und parallel zu dieser Schmalseite drehbar gelagert sind,
daß am oberen Ende des U-Profilabschnittes (11) im Mittelschenkel (26) ein Durchbruch (17) eingebracht ist, in den ein ringförmiger Kunststoff-Flansch (13) isolierend eingesetzt ist,
daß das Bedienungspult (10) oder dgl. im Bereich des Kunststoff-Flansches (13) an dem U-Profilabschnitt (11) befestigt ist und
daß die obere Stirnseite des U-Profilabschnittes (11) mittels eines mit einem Haltegriff (28) versehenen Kopfstückes (27) verschlossen ist.

2. Ständer nach Anspruch 1, dadurch gekennzeichnet, daß die Ausnehmung in der Schmalseite der Standplatte (30) durch über die Oberseite derselben hochgezogene Wandteile (35,36,37) gebildet ist, die über geneigte Wandabschnitte in die Oberseite der Standplatte (30) übergehen.

3. Ständer nach Anspruch 1 oder 2, dadurch gekennzeichnet, daß der U-Profilabschnitt (11) mit dem Mittelschenkel (26) und den Seitenschenkeln (18,19) mit den Wandteilen (35,36,37) der Standplatte (30) verbunden, vorzugsweise verschraubt ist.

4. Ständer nach einem der Ansprüche 1 bis 3, dadurch gekennzeichnet, daß die Innenseite des Mittelschenkels (26) des U-Profilabschnittes (11) abwechselnd im Querschnitt T-förmige Längsnuten (24) und Längsstege (25) aufweist.

5. Ständer nach einem der Ansprüche 1 bis 4, dadurch gekennzeichnet, daß die Seitenschenkel (18,19) zumindest in den freien Endbereichen doppelwandig ausgebildet sind und zu ihren Stirnseiten hin offene Stecknuten bilden, in die Haltestege der Deckplatte (20) einführbar und darin festlegbar sind.

6. Ständer nach einem der Ansprüche 1 bis 5, dadurch gekennzeichnet, daß die untere Kante der Schmalseite mit dem U-Profilabschnitt (11) über eine Schräge (50) in die Standfläche der Standplatte (30) übergehen und daß die Laufrollen (43,47) über diese Schräge (50) der Standplatte (30) vorstehen.

7. Ständer nach einem der Ansprüche 1 bis 6, dadurch gekennzeichnet, daß die Laufrollen (43,47) auf Schrauben (40,44) drehbar gelagert sind, die in vertikalen Wandteilen (36,37,38,39) der Standplatte (30) befestigt sind.

8. Ständer nach einem der Ansprüche 1 bis 7, dadurch gekennzeichnet, daß die Standplatte (30) innerhalb eines umlaufenden Randes (31) mittels längs- und quergerichteter Rippen (32,33) versteift ist.

9. Ständer nach einem der Ansprüche 1 bis 8, dadurch ekennzeichnet, daß der Kunststoff-Flansch (13) über eine Kunststoffscheibe (14) an der Innenseite des Mittelschenkels (26) des U-Profilabschnittes (11) anliegt und daß das Bedienungspult (10) oder dgl. mit seiner Rückwand mittels einer ringförmigen Klemmscheibe (16) an dem in den Durchbruch (17) eingesetzten Kunststoff-Flansch (13) befestigt ist, wobei zwischen der Rückwand des Bedienungspults (10) oder dgl. und dem Mittelschenkel (26) des U-Profilabschnittes (11) eine weitere Kunststoffscheibe (12) angeordnet ist.

10. Ständer nach Anspruch 9, dadurch gekennzeichnet, daß die Rückwand des Bedienungspultes (10) oder dgl. innerhalb der Klemmscheibe (16) mit einem Durchbruch zum Einführen der Zuleitungen versehen ist oder eine Steckeinrichtung für eine am Zuleitungskabel angebrachte komplementäre Steckeinrichtung trägt.

11. Ständer nach einem der Ansprüche 1 bis 10, dadurch gekennzeichnet, daß das Kopfstück (27) mittels Steckansätzen (29) in die Aufnahme des U-Profilabschnittes (11) eingesteckt ist, daß das Kopfstück (27) kappenartig ausgebildet ist und im Querschnitt dem Querschnitt des mit der Deckplatte (20) verschlossenen U-Profilabschnittes (11) entspricht und daß in die mit der Deckplatte (20) fluchtende Wand des Kopfstückes ein als Langloch ausgebildeter Haltegriff (28) eingebracht ist.

## Claims

1. Stand for a control desk or the like, which stand is in the form of a vertically orientated column-like profile section, its lower end being secured to a supporting plate and its upper end carrying the control desk or the like, characterised in that the column-like profile section is a U-shaped profile section (11) with a central arm (26) and two lateral arms (18, 19), said section being secured to a narrow end of a rectangular, cap-like supporting plate (30), which is open towards the supporting surface, in a recess with an outwardly open receiver means, in that the receiver means for the U-shaped profile section (11) can be covered by means of a cover plate (20), in that the supporting plate (30) is provided with securing recesses (34) for securing screws and has at least one roller (43, 47) on the narrow end with the U-shaped profile section (11) on each side thereof, in that the rollers (43, 47) terminate flush with the supporting surface of the supporting plate (30), protrude at the narrow end thereof and are rotatably mounted horizontally and parallel relative to this narrow end, in that an opening (17) is provided in the central arm (26) at the upper end of the U-shaped profile section (11), an annular plastics material flange (13) being inserted into said opening in an insulating manner, in that the control desk (10) or the like is secured to the U-shaped profile section (11) in the region of the plastics material flange (13), and in that the upper end face of the U-shaped profile section (11) is sealed by means of an upper portion (27) which is provided with a handle (28).

2. Stand according to claim 1, characterised in that the recess in the narrow end of the supporting plate (30) is formed by wall portions (35, 36, 37), which are raised over the upper end thereof and extend, via inclined wall portions, into the upper surface of the supporting plate (30).

3. Stand according to claim 1 or 2, characterised in that the U-shaped profile section (11), provided with the central arm (26) and the lateral arms (18, 19), is connected to the wall portions (35, 36, 37) of the supporting plate (30) and is preferaby screw-connected thereto.

4. Stand according to one of claims 1 to 3, characterised in that the inner surface of the central arm (26) of the U-shaped profile section (11) is provided alternately with elongate slots (24) and elongate crosspiece members (25), which component parts (24, 25) have a T-shaped cross-section.

5. Stand according to one of claims 1 to 4, characterised in that the lateral arms (18, 19) have double walls, at least in the free end regions, and form insert grooves which are open towards their end faces, retaining webs of the cover plate (20) being insertable into said grooves and being securable therein.

6. Stand according to one of claims 1 to 5, characterised in that the lower edge of the narrow end extends, with the U-shaped profile section (11), via an inclination (50), into the supporting face of the supporting plate (30), and in that the rollers (43, 47) protrude beyond this inclination (50) of the supporting plate (30).

7. Stand according to one of claims 1 to 6, characterised in that the rollers (43, 47) are rotatably mounted on screws (40, 44), which are secured in vertical wall portions (36, 37, 38, 39) of the supporting plate (30).

8. Stand according to one of claims 1 to 7, characterised in that the supporting plate (30) is reinforced, internally of a circumferential edge (31), by means of longitudinally and transversely orientated ribs (32, 33).

9. Stand according to one of claims 1 to 8, characterised in that the plastics material flange (13) abuts, via a plastics material disc (14), against the internal surface of the central arm (26) of the U-shaped profile section (11), and in that the control desk (10) or the like is secured with its rear wall, by means of an annular clamping disc (16), to the plastics material flange (13), which is inserted into the opening (17), an additional plastics material disc (12) being disposed between the rear wall of the control desk (10) or the like and the central arm (29) of the U-shaped profile section (11).

10. Stand according to claim 9, characterised in that the rear wall of the control desk (10) or the like is provided, internally of the clamping disc (16), with an opening for the insertion of the leads, or it has an insert means for the insertion of a complementary insert means attached to the lead wire.

11. Stand according to one claims 1 to 10, characterised in that the upper portion (27) is inserted into the receiver means of the U-shaped profile section

5

(11) by means of insert attachments (29), in that the upper portion (27) is cap-like and corresponds, in cross-section, to the cross-section of the U-shaped profile section (11), which is sealed by the cover plate (20), and in that a handle (28), which is in the form of an elongate hole, is provided in the wall of the upper portion aligned with the cover plate (20).

## Revendications

1. Support pour un pupitre de commande ou analogue, qui est conçu sous forme de tronçon de profilé constituant une colonne dirigée verticalement, qui est fixé, à l'extrémité inférieure, à une plaque d'appui et qui, à l'extrémité supérieure, porte le pupitre de commande ou analogue, caractérisé en ce que le tronçon de profilé constituant la colonne est un tronçon (11) de profilé en U, qui présente une âme (26) et deux ailes (18, 19) et qui est fixé sur un petit côté d'une plaque (30) d'appui rectangulaire, en forme de coiffe ouverte en direction de la surface d'appui, dans un évidement à face de réception ouverte vers l'extérieur; en ce que l'on peut recouvrir la face de réception du tronçon (11) de profilé en U au moyen d'une plaque (20) de recouvrement; en ce que la plaque (30) d'appui est munie de réceptacles (34) pour des vis de fixation et porte, sur le petit côté, avec le tronçon (11) de profilé en U, des deux côtés de ce profilé, au moins une roulette (43, 47); en ce que les roulettes (43, 47) viennent affleurer la surface d'appui de la plaque (30) d'appui, dépassent du petit côté de cette plaque d'appui et sont portées, avec liberté de rotation, horizontalement et parallèment à ce petit côté; en ce qu'à l'extrémité supérieure du tronçon (11) de profilé en U, dans l'âme (26) est prévue une découpe (17), dans laquelle une pièce (13) annulaire en matière plastique est insérée pour jouer un rôle d'isolation; en ce que le pupitre de commande (10) ou analogue est fixé au tronçon (11) de profilé en U au voisinage de la pièce (13) en matière plastique; et en ce que la face frontale supérieure du tronçon (11) de profilé en U est obturée au moyen d'une pièce de tête (27) munie d'une poignée (28).

2. Support selon la revendication 1, caractérisé en ce que l'évidement dans le petit côté de la plaque (30) d'appui est formé par des portions de paroi (35, 36, 37), qui sont relevées au-dessus de la face supérieure de cette plaque d'appui et qui, par des portions de paroi inclinées, formant une transition, se prolongent par la face supérieure de la plaque (30) d'appui.

3. Support selon la revendication 1 ou 2, caractérisé en ce que le tronçon (11) de profilé en U, présentant l'âme (26) et les ailes (18, 19), est relié, de préférence par vissage avec les portions de paroi (35, 36, 37) de la plaque (30) d'appui.

4. Support selon l'une des revendications 1 à 3, caractérisé en ce que la face intérieure de l'âme (36) du tronçon (11) de profilé en U présente en alternance en coupe des rainures longitudinales (24) et des nervures longitudinales (25), en forme de T.

5. Support selon l'une des revendications 1 à 4, caractérisé en ce que les ailes (18, 19) sont conçues à double paroi, au moins dans les zones d'extrémité libres, et forment des rainures d'enfichage, qui sont ouvertes en direction de leurs faces frontales, et dans lesquelles on peut introduire, et y fixer, les nervures de fixation de la plaque (20) de recouvrement.

6. Support selon l'une des revendications 1 à 5, caractérisé en ce que les arêtes inférieures du petit côté, avec le tronçon (11) de profilé en U, se prolongent par l'intermédiaire d'un biseau oblique (50) par la surface d'appui de la plaque (30) d'appui, et en ce que les roulettes (43, 47) dépasssent, au-delà de ce biseau oblique (50), de la plaque (30) d'appui.

7. Support selon l'une des revendications 1 à 6, caractérisé en ce que les roulettes tourillonnent sur des axes vissés (40, 44), qui sont fixés sur les portions verticales (37, 38, 39) de la paroi de la plaque (30) d'appui.

8. Support selon l'une des revendications 1 à 7, caractérisé en ce qu'à l'intérieur d'un bord périphérique (31), la plaque (30) d'appui est raidie au moyen de nervures (32, 33) dirigées longitudinalement et transversalement.

9. Support selon l'une des revendications 1 à 8, caractérisé en ce que la pièce (13) de matière plastique s'appuie, par l'intermédiaire d'un disque (14) en matière plastique, contre la face intérieure de l'âme (26) du tronçon (11) de profilé en U; et en ce que le pupitre de commande (10) ou analogue est fixé, par sa paroi arrière et au moyen d'un disque (16) annulaire de bridage, contre la pièce (13) en matière plastique insérée dans la découpe (17), un autre disque (12) en matière plastique étant disposé entre la paroi arrière du pupitre de commande (10) ou analogue et l'âme (26) du tronçon (11) de profilé en U.

10. Support selon la revendication 9, caractérisé en ce que la paroi arrière du pupitre de commande (10) ou analogue présente, à l'intérieur du disque (16) de bridage, une découpe pour l'introduction des conducteurs d'alimentation, ou bien porte un dispositif d'enfichage pour un dispositif d'enfichage complémentaire rapporté sur le câble d'alimentation.

11. Support selon l'une des revendications 1 à 10, caractérisé en ce que la pièce de tête (27) est enfichée, au moyen d'embouts (29) d'enfichage, dans la position de réception du tronçon (11) de profilé en U; en ce que la pièce de tête (27) a la forme d'une coiffe et correspond, en coupe, à la coupe du tronçon (11) de profilé en U obturé par la plaque (20) de recouvrement; et en ce que, dans la paroi de la pièce de tête qui affleure la plaque (20) de recouvrement, est prévue une poignée (28) en forme de boutonnière allongée.

FIG.1

FIG.2

FIG.3